# FASCICULE DE BREVET EUROPEEN

(11) **EP 2 901 122 B1**
(45) Date de publication et mention de la délivrance du brevet: **13.07.2022**
(21) Numéro de dépôt: 13766375.3
(22) Date de dépôt: 26.09.2013
(51) Int. Cl.: G01L 9/00, G01L 13/02, G01L 19/04

(54) **CAPTEUR DE PRESSION A BASE DE NANOJAUGES COUPLEES A UN RESONATEUR**
DRUCKSENSOR AUS AN EINEN RESONATOR GEKOPPELTEN NANOMESSINSTRUMENTEN
PRESSURE SENSOR MADE FROM NANOGAUGES COUPLED TO A RESONATOR

(30) Priorité: 26.09.2012 FR 1259067
(43) Date de publication de la demande: 05.08.2015
(73) Titulaire: Safran Electronics & Defense, 75015 Paris (FR)
(72) Inventeur: RIOU, Jean-Christophe, 77550 MOISSY-CRAMAYEL (FR); LEHEE, Guillaume, 77550 MOISSY-CRAMAYEL (FR)
(74) Mandataire: Lavialle, Bruno François Stéphane
(86) Numéro de dépôt international: PCT/EP2013/070084
(87) Numéro de publication internationale: WO 2014/049062

(56) Documents cités:
- EP-A2- 1 273 896
- EP-A2- 2 008 965
- US-A1- 2007 074 578
- WELHAM C J ET AL: "A Laterally Driven Micromachined Resonant Pressure Sensor", 19950625; 19950625 - 19950629, vol. 2, 25 juin 1995 (1995-06-25), pages 586-589, XP010305169,
- CHRISTOPHER J WELHAM ET AL: "A high accuracy resonant pressure sensor by fusion bonding and trench etching", SENSORS AND ACTUATORS A: PHYSICAL, vol. 76, no. 1-3, 31 août 1999 (1999-08-31), pages 298-304, XP055067481, ISSN: 0924-4247, DOI: 10.1016/S0924-4247(99)00065-5

## Description

La présente invention concerne un capteur de pression d'un fluide, utilisable par exemple sur une roue de véhicule pour détecter la pression de gonflage d'un pneumatique de cette roue.

Dans les applications nécessitant des capteurs de faible encombrement, il est connu de recourir à des capteurs formés par gravure dans des plaques de matériau cristallin. Un tel capteur de pression, dit de type résonant et reconnu pour avoir des performances supérieures aux capteurs micro-usinés courants à jauge de contrainte sur membrane, comprend un boîtier définissant un logement, et au moins un résonateur reçu dans le logement et suspendu par des poutres flexibles à au moins une membrane élastiquement déformable fermant le logement. Le logement contient également des moyens d'excitation du résonateur pour mettre en vibration le résonateur et des moyens de détection d'une fréquence de vibration du résonateur. La membrane déformable est ainsi en interaction avec le résonateur de telle manière qu'une déformation de la membrane sous la pression du fluide environnant entraîne une variation correspondante de la fréquence du résonateur. Les moyens d'excitation sont agencés pour mettre en vibration le résonateur à sa fréquence de résonance et des moyens de détection sont par exemple des éléments capacitifs ou des jauges de contrainte qui fournissent à une unité de commande un signal représentatif de la fréquence de vibration du résonateur. L'unité de commande est agencée pour déduire, de la fréquence détectée, la pression s'exerçant sur la membrane.

Il apparaît que nombre de ces capteurs présentent une sensibilité réduite.

Un capteur de pression à détection capacitive est connu du document Welham C. J. et al., « A Laterally Driven Micromachined Resonant Pressure Sensor », vol.2, 25 juin 1995, pages 586-589, XP010305169. La détection capacitive, complexe à mettre au point, est moins efficace que la détection par jauge de contrainte, tout au moins théoriquement. En pratique, la détection par jauges de contrainte se révèle relativement peu performante.

Pour améliorer la sensibilité des capteurs, le circuit de l'unité de commande a été complexifié pour traiter les signaux fournis par les jauges de contrainte. Ceci a contribué à augmenter le coût et l'encombrement général du capteur sans pour autant apporter en contrepartie une augmentation suffisante de la sensibilité.

Il est connu du document EP-A-1273896 un capteur de pression en matériau semi-conducteur, comprenant un résonateur reçu dans un logement et suspendu par des poutres flexibles à au moins une membrane élastiquement déformable fermant le logement qui contient également des moyens d'excitation du résonateur pour mettre en vibration le résonateur et une jauge de contrainte montée entre deux poutres.

Un but de l'invention est de remédier au moins en partie à ce manque de sensibilité.

Dans les capteurs de pression à membrane, résonateur et jauge de contrainte, le matériau cristallin est un matériau semi-conducteur sur lequel la jauge de contrainte est réalisée par dopage de la surface du matériau semi-conducteur. Or, on s'est aperçu que des migrations non souhaitées des dopants au niveau de la jauge de contrainte, sur toute la longueur de celle-ci, venaient diminuer la sensibilité de ladite jauge. La mesure est fortement sensible à la température et tend à dériver avec le temps.

Selon l'invention, on prévoit, un capteur de pression selon la revendication 1 et selon la revendication 13.

Ainsi, la jauge de contrainte n'est pas en contact avec le reste du matériau constituant le capteur que par ses extrémités. La section de passage possible pour les dopants est donc extrêmement réduite, ce qui limite leur possibilité de migration. Il en est de même de l'homogénéité des dopants en nature (bore, phosphore, arsenic...) et en concentration. En outre, la suspension de la jauge de contrainte à la membrane permet de maintenir le résonateur et la jauge de contrainte sensiblement sur une même ligne de niveau lors de leur déplacement hors du plan en réponse à la pression, ce qui facilite le traitement des signaux fournis par la jauge de contrainte.

Avantageusement, la jauge de contrainte est plongée dans un vide de préférence secondaire afin d'améliorer la stabilité et les performances de la mesure (facteur de qualité, facteur de jauge...). En effet, les interactions entre la jauge et les molécules de gaz qui auraient pu être contenues dans le logement sont limitées, ce qui permet d'éviter les piégeages de charges, les frottements visqueux, etc.

Avantageusement, la jauge a une section transversale rectangulaire de côté de longueur inférieure à 1 µm et, de préférence, égale à environ 250 nm.

La section de passage disponible pour une migration des dopants est ainsi extrêmement faible. En outre, ceci permet une plus grande latitude de positionnement de la jauge de contrainte.

Avantageusement alors, la jauge a une longueur inférieure à 10 µm et, de préférence, d'environ 3 µm.

La jauge est alors particulièrement compacte, ce qui permet de diminuer l'encombrement du capteur.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique partielle de dessus d'un capteur selon un premier mode de réalisation ne faisant pas partie de l'invention,
- la figure 2 est une vue schématique partielle de dessus d'un capteur selon un deuxième mode de réalisation faisant partie de l'invention de l'invention,
- la figure 3 est une vue schématique de dessus d'un capteur selon un troisième mode de réalisation faisant partie de l'invention.

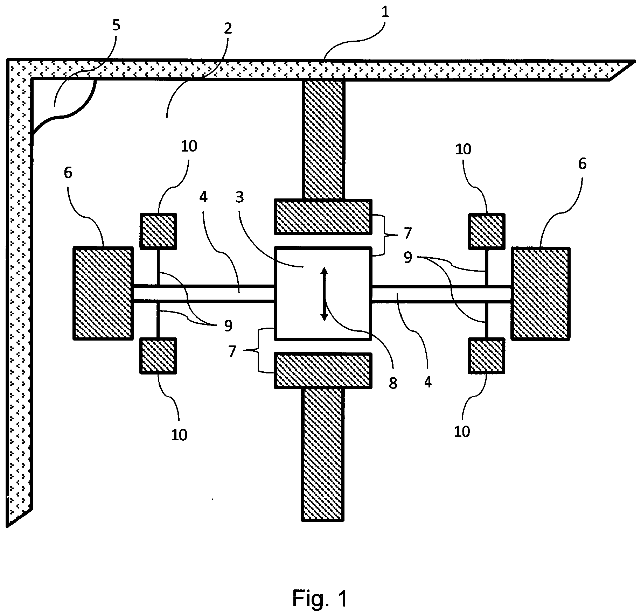

En référence à la figure 1, le capteur de pression conforme au premier mode de réalisation de l'invention comprend un boîtier 1, ici de forme sensiblement parallélépipédique, définissant un logement 2 sous vide secondaire (dans ce mode de réalisation, la pression est d'au plus 10⁻⁵ atmosphère) .

Un résonateur 3, sous la forme d'une unique masselotte, est reçu dans le logement 2 et est suspendu, par des poutres flexibles généralement désignées en 4, à une membrane 5 élastiquement déformable fermant le logement 2 (la membrane 5 bouche une ouverture supérieure du logement 2 et s'étend dans un plan parallèle à la feuille à la figure 1).

Le résonateur 3 a une forme sensiblement parallélépipédique de section rectangulaire comme représentée sur la figure 1. La longueur de la masse sismique du résonateur 3 est sensiblement comprise entre 20 et 40% de la longueur totale du résonateur 3, de préférence 25%. Le résonateur 3 n'est pas en contact direct avec la membrane 5.

Les poutres 4 forment deux bras de suspension du résonateur 3, positionnées de part et d'autre de celui-ci, et reliées à deux plots 6 solidaires de la membrane. Les poutres 4 peuvent être dédoublées en paires de poutres parallèles. Les plots 6 sont réalisés en une seule pièce avec la partie fine de la membrane 5 et s'étendent en saillie de celle-ci. Les plots 6 sont positionnés de telle manière que la déformation de la membrane 5 provoque un déplacement longitudinal des plots 6 qui est transmis aux poutres 4.

Le logement 2 contient également des moyens d'excitation du résonateur 3 qui sont agencés pour mettre en vibration le résonateur 3. Les moyens d'excitation comprennent ici des paires d'électrodes 7 en regard formant transducteur qui lorsqu'elles sont soumises à une tension électrique engendrent une force de déplacement sur le résonateur 3 provoquant un mouvement alternatif du résonateur 3 selon une direction 8 parallèle à la membrane 5 et perpendiculaire aux poutres 4.

Le capteur comprend des moyens de détection d'une fréquence de vibration du résonateur 3. Les moyens de détection comprennent des jauges de contrainte 9, fonctionnant en différentiel, qui s'étendent perpendiculairement aux poutres 4 et qui sont suspendues chacune en ayant une extrémité solidaire d'une des poutres 4 et une extrémité solidaire de la membrane 5 et plus précisément d'un plot 10 de la membrane 5. Les plots 10 sont réalisés en une seule pièce avec la partie fine de la membrane 5 et s'étendent en saillie de celle-ci. Les plots 10 sont positionnés de telle manière que la déformation de la membrane 5 provoque un déplacement des plots 10 qui n'est pas transmis aux jauges de contrainte 9.

Les jauges de contrainte 9 sont agencées pour former des paires différentielles fonctionnant alternativement en tension/compression et en opposition de phase. Les moyens de détection sont agencés de telle manière que les jauges de contrainte 9 vibrent dans un mode différentiel de tension-compression en dehors de leur gamme de résonance, en formant un pont de Wheatstone. Ceci permet de dé-corréler la contribution au signal de la température et la contribution au signal de la pression car la température est seule présente dans le mode commun tandis que la température et la pression sont toutes deux présentes dans le mode différentiel dynamique.

Dans l'invention, les jauges de contrainte sont agencées pour permettre la mesure d'une résistance représentative d'une fréquence du résonateur et non une capacité représentative d'une amplitude de déformation de la membrane comme cela a pu être fait dans les capteurs de l'art antérieur.

Les plots 10 sont au voisinage des plots 6 et les jauges de contrainte 9 sont reliées aux poutres 4 au voisinage de la liaison des poutres 4 avec les plots 6, de telle manière que l'ancrage des jauges 9 sur les poutres 4 soit dans une zone comprise entre 5 et 15% (avantageusement 8 à 9%) de la longueur des poutres 4.

Chaque jauge de contrainte 9 a une section transversale rectangulaire de plus grand côté de longueur inférieure à 1 µm et, avantageusement ici, égale à environ 250 nm et de plus petit côté de longueur jusqu'à un ordre de grandeur inférieur.

Chaque jauge de contrainte 9 a une longueur inférieure à 10 µm et, avantageusement ici, d'environ 3 µm.

Le capteur, et plus précisément le résonateur 3, la membrane 5, les poutres 4, les plots 6, 10 et les jauges de contrainte 9 sont réalisés par gravure dans une plaque d'un matériau cristallin tel que du silicium par exemple allié à de l'azote ou du carbone, du silicium polycristallin ou polysilicium, ou un polymère à cristaux liquide.

Le résonateur et les jauges de contrainte sont agencés pour former des zones dopées sensiblement identiques en nature et en concentration.

L'agencement du capteur de l'invention permet de fabriquer des capteurs ayant des gammes de pression différentes sur une même galette de matériau cristallin en jouant par exemple préférentiellement sur les dimensions des membranes et des résonateurs.

Les éléments identiques ou analogues à ceux précédemment décrits porteront la même référence numérique dans la description qui suit du deuxième mode de réalisation et du troisième mode de réalisation.

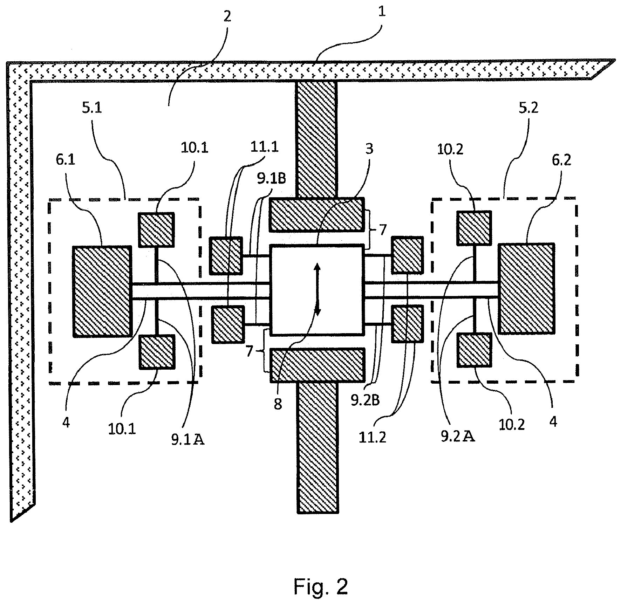

En référence à la figure 2 sur laquelle est représenté le deuxième mode de réalisation, le boîtier 1 a une forme de cadre sur lequel s'étendent une membrane 5.1 et une membrane 5.2 coplanaires l'une à l'autre.

Il est ainsi défini une cavité dans laquelle est disposé un résonateur 3 suspendu à la membrane 5.1 et à la membrane 5.2 par des poutres 4. Deux poutres 4 ont une extrémité solidaire du résonateur 3 et une extrémité opposée solidaire d'un plot 6.1, 6.2.

Le capteur comprend des premières jauges 9.1A, 9.2A, identiques aux jauges 9 du premier mode de réalisation, qui ont une extrémité solidaire d'un plot 10.1, 10.2 solidaire de la membrane 5.1, 5.2 respectivement et une extrémité opposée solidaire d'une des poutres 4 de telle manière que les premières jauges de contrainte 9.1A, 9.2A, perpendiculaires aux poutres 4 et parallèles aux membranes 5.1, 5.2, forment des paires différentielles. Une des jauges 9.1A est en tension lorsque l'autre des jauges 9.1A est en compression, et inversement. Il en est de même pour les jauges 9.2A. Les premières jauges de contrainte 9.1A, 9.2A fonctionnent comme les jauges de contrainte 9 du premier mode de réalisation. Chacun des plots 6 est positionné dans une zone comprise entre 20% et 60% de la moitié de la dimension de la membrane du capteur, préférentiellement selon le petit axe, depuis le centre de la membrane 5.1, 5.2 (de préférence 35%).

Le capteur comprend deux deuxièmes jauges 9.1B et deux deuxièmes jauges 9.2B qui ont une extrémité solidaire d'un plot 11.1, 11.2 à proximité respectivement des membranes 5.1, 5.2 mais non solidaires de celles-ci, et une extrémité opposée solidaire du résonateur 3 de telle manière que les deuxièmes jauges de contrainte 9.1B, 9.2B, parallèles aux poutres 4 et parallèles aux membranes 5.1, 5.2, fonctionnent en opposition de phase. Les deux jauges de contrainte 9.1B sont en tension lorsque les deux jauges de contrainte 9.2B sont en compression et inversement.

En utilisation, les membranes 5.1, 5.2 sont destinées à être soumises respectivement à une pression P1, P2.

Les premières jauges de contrainte 9.1A et 9.2A permettent de mesurer un signal proportionnel à (P1+P2)/2.

Les deuxièmes jauges de contrainte 9.1B et 9.2B permettent de mesurer un signal proportionnel à ΔP=P1-P2. Ainsi, si P1>P2, les jauges de contrainte 9.1B seront globalement en compression et les jauges de contrainte 9.2B seront globalement en élongation, et inversement si P1<P2.

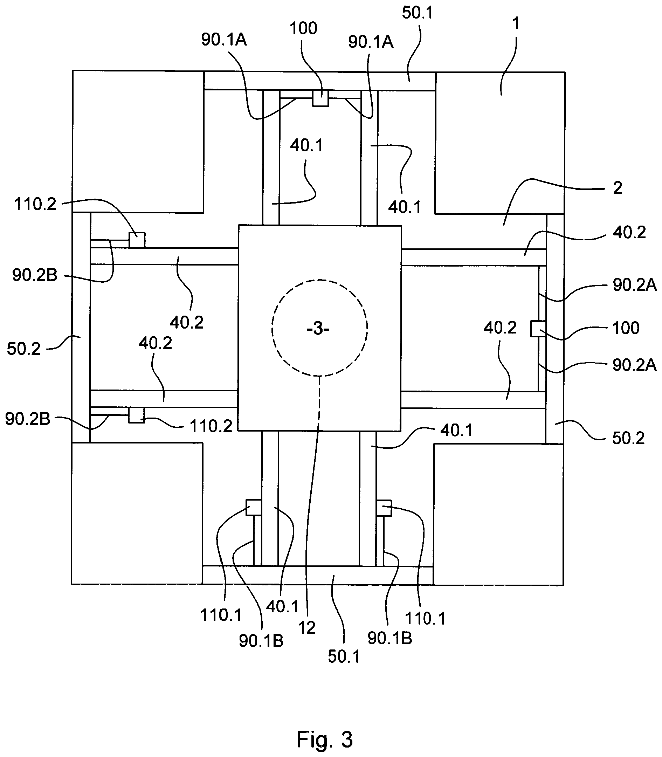

En référence à la figure 3, et selon le troisième mode de réalisation, le boîtier 1, de forme parallélépipédique comprend ici quatre ouvertures latérales d'accès au logement 2 (une ouverture sur chacun des côtés du boîtier 1). Ces ouvertures sont obturées par des membranes formant une première paire de membranes 50.1 et une deuxième paire de membranes 50.2, chaque paire de membranes obturant les ouvertures de deux côtés opposés du boîtier 1 et formant ainsi une cavité qui sera mise sous un vide secondaire. Le boîtier 1 est agencé de telle manière que la première paire de membranes 50.1 et la deuxième paire de membranes 50.2 soient soumises à des pressions différentes (mesure de pression différentielle). Le boîtier 1 comprend à cette fin au moins une première ouverture, non représentée, d'accès aux membranes 50.1 de la première paire de membranes 50.1 et au moins une deuxième ouverture, non représentée, d'accès aux membranes 50.2 de la deuxième paire de membranes 50.2, lesdites ouvertures débouchant par exemple sur des surfaces opposées du boîtier 1. Ainsi, le capteur peut être positionné de telle manière que les membranes 50.1 soient soumises au fluide dont la pression doit être mesurée et les membranes 50.2 soient soumises à une autre pression, soit une pression à mesurer soit une pression de référence.

Les poutres 40 sont réparties en deux premières paires de poutres 40.1 parallèles entre elles et deux deuxièmes paires de poutres 40.2 parallèles entre elles reliant aux paires de membranes 50.1, 50.2 quatre côtés du résonateur 3 opposés deux à deux. Les poutres 40.1 reliées aux membranes 50.1 sont perpendiculaires auxdites membranes 50.1 et les poutres 40.2 reliées aux membranes 50.2 sont perpendiculaires auxdites membranes 50.2. Les poutres 40.1, 40.2 sont reliées directement à la partie fine des membranes 50.1, 50.2. Les premières paires de poutres 40.1 sont sensiblement perpendiculaires aux deuxièmes paires de poutres 40.2.

Le capteur comporte huit jauges de contrainte 90.1A, 90.1B, 90.2A, 90.2B reliées chacune à une des poutres 40.1, 40.2 vibrant dans un mode différentiel de tension-compression en dehors de leur gamme de résonance et formant au moins un pont de Wheatstone.

Les jauges de contrainte 90.1A liées aux poutres 40.1 de l'une des premières paires de poutres 40.1 s'étendent perpendiculairement aux poutres 40.1 et les jauges de contrainte 90.1B liées aux poutres 40.1 de l'autre des premières paires de poutres 40.1 s'étendent parallèlement aux poutres 40.1. Les jauges de contrainte 90.2A liées aux poutres 40.2 de l'une des deuxièmes paires de poutres 40.2 s'étendent perpendiculairement aux poutres 40.2 et les jauges de contrainte 90.2B liées aux poutres 40.2 de l'autre des deuxièmes paires de poutres 40.2 s'étendent parallèlement aux poutres 40.2.

Chaque jauge de contrainte 90.1A, 90.2A est suspendue en ayant une extrémité liée à une des poutres 40.1, 40.2 et une extrémité liée à un plot 100 de la membrane 50.1, 50.2 correspondante. Chaque jauge de contrainte 90.1B, 90.2B est suspendue en ayant une extrémité liée à un plot 110.1, 110.2 solidaire d'une des poutres 40.1, 40.2 et une extrémité liée directement à la partie fine de la membrane 50.1, 50.2 correspondante. Les plots 110.1, 110.2 sont réalisés en une seule pièce avec la poutre 40.1, 40.2 et s'étendent en saillie de celle-ci. Les plots 110.1, 110.2 sont positionnés de telle manière que la déformation des poutres 40.1, 40.2 provoque un déplacement des plots 110.1, 110.2 qui est transmis aux jauges de contrainte 90.

Les jauges de contrainte 90.1A, 90.2A sont utilisées pour la mesure de pression en elle-même alors que les jauges de contrainte 90.1B, 90.2B sont utilisées pour évaluer l'influence de la température sur le comportement des poutres 40.1, 40.2. On comprend en effet que les jauges de contraintes 90.1B et 90.2B mesurent essentiellement la dilation thermique des poutres 40.1, 40.2. Les signaux fournis par les jauges de contrainte 90.1, 90.2, A et B sont traités par une unité de commande, non représentée et connue en elle-même, qui est reliée au capteur.

Les jauges de contraintes 90 ont les mêmes dimensions que dans le premier mode de réalisation.

Les moyens d'excitation sont agencés pour déplacer le résonateur 3 alternativement entre deux positions selon une direction normale au plan de la feuille de la figure 3. Les moyens d'excitation comprennent au moins un élément, ici une électrode 12, de déplacement du résonateur 3 depuis une première position vers une deuxième position et un élément de rappel élastique du résonateur vers sa première position. L'élément de rappel élastique est ici constitué par les poutres 40.1, 40.2.

Bien entendu, l'invention n'est pas limitée aux modes de réalisation décrits mais englobe toute variante entrant dans le champ de l'invention telle que définie par les revendications.

Les paires de poutres peuvent être remplacées par des poutres uniques.

Le capteur peut être réalisé à partir d'une ou plusieurs plaques de matériau cristallin par gravure, collage et/ou soudure.

La membrane peut avoir une forme à contour polygonal et par exemple rectangulaire ou carré, ou bien à contour courbe et par exemple elliptique ou circulaire. Dans le cas d'une forme allongée ayant un grand axe et un petit axe, on choisira de préférence un ratio de dimensions petit axe/ grand axe compris sensiblement entre 1 et 1/2 et, de préférence, sensiblement égal à 1/1,3.

Les moyens d'excitations peuvent comprendre des électrodes planes ou d'une autre forme et par exemple en forme de peignes.

En variante, les plots 10 peuvent être en une seule pièce avec les plots 6.

En variante encore, les plots 10 sont au voisinage du résonateur 3 et les jauges de contraintes 9 sont reliées aux poutres 4 au voisinage de la liaison des poutres 4 avec le résonateur 3.

## Revendications

1. Capteur de pression en matériau semi-conducteur, comprenant un boîtier (1) définissant un logement (2) sous vide secondaire, au moins un résonateur (3) reçu dans le logement et suspendu par des poutres flexibles (4) à des membranes (50.1, 50.2) élastiquement déformables fermant le logement qui contient également des moyens (7, 12) d'excitation du résonateur pour mettre en vibration le résonateur et des moyens de détection d'une fréquence de vibration du résonateur, les moyens de détection comprenant au moins une jauge piezorésistive de contrainte (9), **caractérisé en ce que** le capteur comporte deux paires de jauges de contrainte (9.1A, 9.1B, 9.2A, 9.2B) reliées chacune à une des poutres, les jauges de contraintes étant suspendues en ayant une extrémité solidaire d'une des poutres et une extrémité solidaire d'une des membranes, **en ce que** le résonateur et les jauges de contrainte sont agencés pour former des zones dopées sensiblement identiques en nature et en concentration, **en ce que** le capteur comprend un seul résonateur (3) et **en ce que** les poutres sont réparties en deux premières poutres (40.1) parallèles entre elles et deux deuxièmes poutres (40.2) parallèles entre elles reliant respectivement aux membranes (50.1, 50.2) quatre côtés du résonateur (3) opposés deux à deux, les premières poutres étant sensiblement perpendiculaires aux deuxièmes poutres.

2. Capteur selon la revendication 1, dans lequel une des jauges de contrainte (90.1A) liée à l'une des premières poutres (40.1) s'étend perpendiculairement aux premières poutres et la jauge de contrainte (90.1B) liée à l'autre des premières poutres s'étend parallèlement aux premières poutres, et les jauges de contraintes (90.2A, 90.2B) liées aux deuxièmes poutres (40.2) sont agencées de la même manière que les jauges de contraintes liées aux premières poutres.

3. Capteur selon la revendication 1, dans lequel le boîtier (1) porte une première paire de membranes (50.1) perpendiculaires aux premières poutres (40.1) et reliées chacune à une des premières poutres et aux jauges de contrainte (90.1) correspondantes, et une deuxième paire de membranes (50.2) perpendiculaires aux deuxièmes poutres (40.2) et reliées chacune à une des deuxièmes poutres et aux jauges de contraintes (90.2) correspondantes, le boîtier étant agencé de telle manière que la première paire de membranes et la deuxième paire de membranes soient soumises à des pressions différentes.

4. Capteur selon la revendication précédente, dans lequel le boîtier (1) comprend au moins une première ouverture d'accès aux membranes (50.1) de la première paire de membranes et au moins une deuxième ouverture d'accès aux membranes (50.2) de la deuxième paire de membranes, les ouvertures débouchant sur des surfaces du même côté du boîtier.

5. Capteur selon l'une quelconque des revendications 1 à 4, dans lequel chaque poutre (40.1, 40.2) est dédoublée pour former une paire de poutres.

6. Capteur selon la revendication 1, dans lequel les poutres (40.1, 40.2) s'étendent perpendiculairement à la membrane (50.1, 50.2).

7. Capteur selon la revendication 1, dans lequel chaque jauge (9.1A, 9.1B, 9.2A, 9.2B) a une section transversale rectangulaire de plus grand côté de longueur inférieure à 1 µm.

8. Capteur selon la revendication 7, dans lequel chaque jauge (9.1A, 9.1B, 9.2A, 9.2B) a une section transversale rectangulaire de plus grand côté de longueur égale à environ 250 nm.

9. Capteur selon la revendication 7, dans lequel chaque jauge (9.1A, 9.1B, 9.2A, 9.2B) a une longueur inférieure à 10 µm.

10. Capteur selon la revendication 9, dans lequel chaque jauge (9.1A, 9.1B, 9.2A, 9.2B) a une longueur d'environ 3 µm.

11. Capteur selon la revendication 1, dans lequel les moyens d'excitation (7, 12) sont agencés pour déplacer le résonateur (3) alternativement entre deux positions.

12. Capteur selon la revendication 1, dans lequel les moyens d'excitation comprennent au moins un élément (12) de déplacement du résonateur depuis une première position vers une deuxième position et un élément (4) de rappel élastique du résonateur vers sa première position.

13. Capteur de pression en matériau semi-conducteur, comprenant un boîtier (1) définissant un logement (2) sous vide secondaire, au moins un résonateur (3) reçu dans le logement et suspendu par des poutres flexibles (4) à au moins une membrane (5.1, 5.2) élastiquement déformable fermant le logement qui contient également des moyens (7, 12) d'excitation du résonateur pour mettre en vibration le résonateur et des moyens de détection d'une fréquence de vibration du résonateur, les moyens de détection comprenant au moins une première jauge piezorésistive de contrainte (9), **caractérisé en ce que** le capteur comprend : un seul résonateur (3), deux poutres (4) reliant deux côtés opposés du résonateur (3) à la membrane (5), deux premières jauges de contrainte (9.1A, 9.2A) suspendues en ayant chacune une extrémité solidaire d'une des poutres et une extrémité solidaire de la membrane, et au moins une deuxième jauge de contrainte (9.1B, 9.2B) parallèle à l'une des poutres et suspendue en ayant une extrémité solidaire du résonateur et une extrémité solidaire de la membrane ; et **en ce que** le résonateur et les jauges de contrainte sont agencés pour former des zones dopées sensiblement identiques en nature et en concentration.

14. Capteur selon la revendication 13, dans lequel les premières jauges de contrainte (9.1A, 9.1B) s'étendent perpendiculairement aux poutres (4).

15. Capteur selon la revendication 13, comprenant deux deuxièmes jauges de contrainte (9.1B, 9.2B).

16. Capteur selon la revendication 13, dans lequel chaque deuxième jauge de contrainte (9.1B, 9.2B) s'étend parallèlement aux poutres.

17. Capteur selon l'une quelconque des revendications 13 à 16, dans lequel chaque poutre (4) est dédoublée pour former une paire de poutres.

18. Capteur selon la revendication 13, dans lequel les poutres (4) et les jauges de contrainte (9.1A, 9.2A, 9.1B, 9.2B) s'étendent parallèlement à la membrane (5.1, 5.2) et les jauges de contrainte (9.1A, 9.2A, 9.1B, 9.2B) ont une extrémité reliée à un plot (10.1, 10.2) en saillie d'une partie fine de la membrane.

19. Capteur selon la revendication 13, dans lequel les poutres (4) s'étendent perpendiculairement à la membrane (5).

20. Capteur selon la revendication 13, dans lequel chaque jauge de contrainte (9.1A, 9.2A, 9.1B, 9.2B) a une section transversale rectangulaire de plus grand côté de longueur inférieure à 1 µm.

21. Capteur selon la revendication 20, dans lequel chaque jauge de contrainte (9.1A, 9.2A, 9.1B, 9.2B) a une section transversale rectangulaire de plus grand côté de longueur égale à environ 250 nm.

22. Capteur selon la revendication 20, dans lequel chaque jauge de contrainte (9.1A, 9.2A, 9.1B, 9.2B) a une longueur inférieure à 10 µm.

23. Capteur selon la revendication 22, dans lequel chaque jauge de contrainte (9.1A, 9.2A, 9.1B, 9.2B) a une longueur d'environ 3 µm.

24. Capteur selon la revendication 13, dans lequel les moyens d'excitation (7, 12) sont agencés pour déplacer le résonateur (3) alternativement entre deux positions.

25. Capteur selon la revendication 13, dans lequel les moyens d'excitation comprennent au moins un élément (12) de déplacement du résonateur depuis une première position vers une deuxième position et un élément (4) de rappel élastique du résonateur vers sa première position.

## Patentansprüche

1. Drucksensor aus Halbleitermaterial, umfassend ein Gehäuse (1), das eine Aufnahme (2) unter Hochvakuum definiert, mindestens einen Resonator (3), der in der Aufnahme aufgenommen und über flexible Balken (4) an elastisch verformbaren Membranen (50.1, 50.2) aufgehängt ist, die die Aufnahme verschließen, die ferner Anregungsmittel (7, 12) zum Anregen des Resonators enthält, um den Resonator in Schwingung zu versetzen, sowie Detektionsmittel zum Erfassen einer Schwingungsfrequenz des Resonators, wobei die Detektionsmittel mindestens einen piezoresistiven Dehnungsmessstreifen (9) umfassen, **dadurch gekennzeichnet, dass** der Sensor zwei Paare von Dehnungsmessstreifen (9.1A, 9.1B, 9.2A, 9.2B) umfasst, die jeweils mit einem der Balken verbunden sind, wobei die Dehnungsmessstreifen aufgehängt sind, wobei ein Ende fest mit einem der Balken verbunden ist und ein Ende fest mit einer der Membranen verbunden ist, dass der Resonator und die Dehnungsmessstreifen so ausgebildet sind, dass sie dotierte Zonen bilden, die in der Art und der Konzentration im Wesentlichen identisch sind, dass der Sensor einen einzigen Resonator (3) umfasst und dass die Balken in zwei zueinander parallele erste Balken (40.1) und zwei zueinander parallele zweite Balken (40.2) aufgeteilt sind, die jeweils vier Seiten des Resonators (3), die paarweise gegenüberliegen, mit den Membranen (50.1, 50.2) verbinden, wobei die ersten Balken im Wesentlichen senkrecht zu den zweiten Balken sind.

2. Sensor nach Anspruch 1, bei dem sich einer der Dehnungsmessstreifen (90.1A), der mit einem der ersten Balken (40.1) verbunden ist, senkrecht zu den ersten Balken erstreckt und sich der Dehnungsmessstreifen (90.1B), der mit dem anderen der ersten Balken verbunden ist, parallel zu den ersten Balken erstreckt, und die Dehnungsmessstreifen (90.2A, 90.2B), die mit den zweiten Balken (40.2) verbunden sind, auf gleiche Weise wie die mit den ersten Balken verbundenen Dehnungsmessstreifen angeordnet sind.

3. Sensor nach Anspruch 1, bei dem das Gehäuse (1) ein erstes Paar von Membranen (50.1) trägt, die senkrecht zu den ersten Balken (40.1) und jeweils mit einem der ersten Balken und mit den entsprechenden Dehnungsmessstreifen (90.1) verbunden sind, sowie ein zweites Paar von Membranen (50.2), die senkrecht zu den zweiten Balken (40.2) und jeweils mit einem der zweiten Balken und mit den entsprechenden Dehnungsmessstreifen (90.2) verbunden sind, wobei das Gehäuse derart ausgebildet ist, dass das erste Paar von Membranen und das zweite Paar von Membranen unterschiedlichen Drücken ausgesetzt sind.

4. Sensor nach dem vorhergehenden Anspruch, bei dem das Gehäuse (1) mindestens eine erste Zugangsöffnung zu den Membranen (50.1) des ersten Paares von Membranen und mindestens eine zweite Zugangsöffnung zu den Membranen (50.2) des zweiten Paares von Membranen umfasst, wobei die Öffnungen auf Oberflächen derselben Seite des Gehäuses münden.

5. Sensor nach einem der Ansprüche 1 bis 4, bei dem jeder Balken (40.1, 40.2) halbiert ist, um ein Paar von Balken zu bilden.

6. Sensor nach Anspruch 1, bei dem sich die Balken (40.1, 40.2) senkrecht zur Membran (50.1, 50.2) erstrecken.

7. Sensor nach Anspruch 1, bei dem jeder Dehnungsmessstreifen (9.1A, 9.2B, 9.2A, 9.2B) einen rechteckigen Querschnitt hat, dessen längere Seite eine Länge kleiner 1µm hat.

8. Sensor nach Anspruch 7, bei dem jeder Dehnungsmessstreifen (9.1A, 9.1B, 9.2A, 9.2B) einen rechteckigen Querschnitt hat, dessen längere Seite eine Länge gleich etwa 250 nm hat.

9. Sensor nach Anspruch 7, bei dem jeder Dehnungsmessstreifen (9.1A, 9.1B, 9.2A, 9.2B) eine Länge kleiner 10 µm hat.

10. Sensor nach Anspruch 9, bei dem jeder Dehnungsmessstreifen (9.1A, 9.1B, 9.2A, 9.2B) eine Länge von ungefähr 3 µm hat.

11. Sensor nach Anspruch 1, bei dem die Anregungsmittel (7, 12) so ausbildet sind, dass die den Resonator (3) abwechselnd zwischen zwei Positionen bewegen.

12. Sensor nach Anspruch 1, bei dem die Anregungsmittel mindestens ein Element (12) zur Bewegung des Resonators von einer ersten Position in eine zweite Position und ein Element (4) zur elastischen Rückstellung des Resonators in seine erste Position umfassen.

13. Drucksensor aus Halbleitermaterial, umfassend ein Gehäuse (1), das eine Aufnahme (2) unter Hochvakuum definiert, mindestens einen Resonator (3), der in der Aufnahme aufgenommen und über flexible Balken (4) an mindestens einer elastisch verformbaren Membran (50.1, 50.2) aufgehängt ist, die die Aufnahme verschließt, die ferner Anregungsmittel (7, 12) zum Anregen des Resonators enthält, um den Resonator in Schwingung zu versetzen, sowie Detektionsmittel zum Erfassen einer Schwingungsfrequenz des Resonators, wobei die Detektionsmittel mindestens einen ersten piezoresistiven Dehnungsmessstreifen (9) umfassen, **dadurch gekennzeichnet, dass** der Sensor umfasst: einen einzigen Resonator (3), zwei Balken (4), die zwei entgegengesetzte Seiten des Resonators (3) mit der Membran (5) verbinden, zwei erste Dehnungsmessstreifen (9.1A, 9.2A), die aufgehängt sind, wobei jeweils ein Ende fest mit einem der Balken verbunden ist und ein Ende fest mit einer der Membranen verbunden ist, sowie mindestens einen zweiten Dehnungsmessstreifen (9.1B, 9.2B), der parallel zu einem der Balken und aufgehängt ist, wobei ein Ende fest mit dem Resonator und ein Ende fest mit der Membran verbunden ist; und dass der Resonator und die Dehnungsmessstreifen so ausgebildet sind, dass sie dotierte Zonen bilden, die in der Art und in der Konzentration im Wesentlichen identisch sind.

14. Sensor nach Anspruch 13, bei dem sich die ersten Dehnungsmessstreifen (9.1A, 9.1B) senkrecht zu den Balken (4) erstrecken.

15. Sensor nach Anspruch 13, umfassend zwei zweite Dehnungsmessstreifen (9.1B, 9.2B).

16. Sensor nach Anspruch 13, bei dem sich jeder zweite Dehnungsmessstreifen (9.1B, 9.2B) parallel zu den Balken erstreckt.

17. Sensor nach einem der Ansprüche 13 bis 16, bei dem jeder Balken (4) halbiert ist, um ein Paar von Balken zu bilden.

18. Sensor nach Anspruch 13, bei dem sich die Balken (4) und die Dehnungsmessstreifen (9.1A, 9.2A, 9.1B, 9.2B) parallel zur Membran (5.1, 5.2) erstrecken und die Dehnungsmessstreifen (9.1A, 9.2A, 9.1B, 9.2B) ein Ende haben, das mit einem von einem dünnen Teil der Membran vorstehenden Kontaktstück (10.1, 10.2) verbunden ist.

19. Sensor nach Anspruch 13, bei dem sich die Balken (4) senkrecht zur Membran (5) erstrecken.

20. Sensor nach Anspruch 13, bei dem jeder Dehnungsmessstreifen (9.1A, 9.2A, 9.1B, 9.2B) einen rechteckigen Querschnitt hat, dessen längere Seite eine Länge kleiner 1µm hat.

21. Sensor nach Anspruch 20, bei dem jeder Dehnungsmessstreifen (9.1A, 9.2A, 9.1B. 9.2B) einen rechteckigen Querschnitt hat, dessen längere Seite eine Länge gleich etwa 250 nm hat.

22. Sensor nach Anspruch 20, bei dem jeder Dehnungsmessstreifen (9.1A, 9.2A, 9.1B, 9.2B) eine Länge kleiner als 10 µm hat.

23. Sensor nach Anspruch 22, bei dem jeder Dehnungsmessstreifen (9.1A, 9.2A, 9.1B, 9.2B) eine Länge von ungefähr 3 µm hat.

24. Sensor nach Anspruch 13, bei dem die Anregungsmittel (7, 12) so ausgebildet sind, dass die den Resonator (3) abwechselnd zwischen zwei Positionen bewegen.

25. Sensor nach Anspruch 13, bei dem die Anregungsmittel mindestens ein Element (12) zum Bewegen des Resonators von einer ersten Position in eine zweite Position und ein Element (4) zum elastischen Rückstellen des Resonators in seine erste Position umfassen.

## Claims

1. Pressure sensor made of semiconductor material, comprising a box (1) defining a housing (2) under a secondary vacuum, at least one resonator (3) received in the housing and suspended by flexible beams (4) from elastically deformable diaphragms (50.1, 50.2) closing the housing that also contains means (7, 12) for exciting the resonator in order to set the resonator into vibration and detector means for detecting a vibration frequency of the resonator, the detector means comprising at least one piezoresistive strain gauge (9), **characterized in that** the sensor includes two pairs of strain gauges (9.1A, 9.1B, 9.2A, 9.2B) each connected to one of the beams, the strain gauges being suspended, having one end secured to one of the beams and one end secured to one of the diaphragms, **in that** the resonator and the strain gauges are arranged to form doped zones that are substantially identical in kind and in concentration, **in that** the sensor includes a single resonator (3) and **in that** the beams consist of two parallel first beams (40.1) and two parallel second beams (40.2) respectively connecting to the diaphragms (50.1, 50.2) four sides of the resonator (3) opposite in pairs, the first beams being substantially perpendicular to the second beams.

2. Sensor according to claim 1, wherein one of the strain gauges (90.1A) connected to one of the first beams (40.1) extends perpendicularly to the first beams and the strain gauge (90.1B) connected to the other of the first beams extends parallel to the first beams, and the strain gauges (90.2A, 90.2B) connected to the second beams (40.2) are arranged in the same manner as the strain gauges connected to the first beams.

3. Sensor according to claim 1, wherein the box (1) carries a first pair of diaphragms (50.1) perpendicular to the first beams (40.1) and each connected to one of the first beams and to the corresponding strain gauges (90.1), and a second pair of diaphragms (50.2) perpendicular to the second beams (40.2) and each connected to one of the second beams and to the corresponding strain gauges (90.2), the box being arranged in such a manner that the first pair of diaphragms and the second pair of diaphragms are subjected to different pressures.

4. Sensor according to the preceding claim, wherein the box (1) has at least one first access opening to the diaphragms (50.1) of the first pair of diaphragms and at least one second access opening to the diaphragms (50.2) of the second pair of diaphragms, the openings opening out to surfaces on the same side of the box.

5. Sensor according to any one of claims 1 to 4, wherein each beam (40.1, 40.2) is duplicated in order to form a pair of beams.

6. Sensor according to claim 1, wherein the beams (40.1, 40.2) extend perpendicularly to the diaphragm (50.1, 50.2) .

7. Sensor according to claim 1, wherein each strain gauge (9.1A, 9.1B, 9.2A, 9.2B) has a cross-section that is rectangular with a long side of length less than 1 µm.

8. Sensor according to claim 7, wherein each strain gauge (9.1A, 9.1B, 9.2A, 9.2B) has a cross-section that is rectangular with a long side of length equal to about 250 nm.

9. Sensor according to claim 7, wherein each strain gauge (9.1A, 9.1B, 9.2A, 9.2B) has a length less than 10 µm.

10. Sensor according to claim 9, wherein each strain gauge (9.1A, 9.1B, 9.2A, 9.2B) has a length of about 3 µm.

11. Sensor according to claim 1, wherein the excitation means (7, 12) are arranged to move the resonator (3) to reciprocate between two positions.

12. Sensor according to claim 1, wherein the excitation means comprise at least one element (12) for moving the resonator from a first position to a second position, and an element (4) for resiliently returning the resonator towards its first position.

13. Pressure sensor made of semiconductor material, comprising a box (1) defining a housing (2) under a secondary vacuum, at least one resonator (3) received in the housing and suspended by flexible beams (4) from at least one elastically deformable diaphragm (5.1, 5.2) closing the housing that also contains means (7, 12) for exciting the resonator in order to set the resonator into vibration and detector means for detecting a vibration frequency of the resonator, the detector means comprising at least a first piezoresistive strain gauge (9), **characterized in that** the sensor comprises: a single resonator (3), two beams (4) connecting two opposite sides of the resonator (3) to the diaphragm (5), two suspended first strain gauges (9.1A, 9.2A) each having one end secured to one of the beams and one end secured to the diaphragm, and at least one second strain gauge (9.1B, 9.2B) parallel to one of the beams and suspended with one end secured to the resonator and one end secured to the diaphragm; and **in that** the resonator and the strain gauges are arranged to form doped zones substantially identical in kind and in concentration.

14. Sensor according to claim 13, wherein the first strain gauges (9.1A, 9.1B) extend perpendicularly to the beams (4).

15. Sensor according to claim 13, having two second strain gauges(9.1B, 9.2B).

16. Sensor according to claim 13, wherein each second strain gauge (9.1B, 9.2B) is parallel to the beams.

17. Sensor according to any one of claims 13 to 16, wherein each beam (4) is duplicated in order to form a pair of beams.

18. Sensor according to claim 13, wherein the beams (4) and the strain gauges(9.1A, 9.2A, 9.1B, 9.2B) extend parallel to the diaphragm (5.1, 5.2) and the strain gauges (9.1A, 9.2A, 9.1B, 9.2B) have one end connected to a stud (10.1, 10.2) projecting from a fine portion of the diaphragm.

19. Sensor according to claim 13, wherein the beams (4) extend perpendicularly to the diaphragm (5).

20. Sensor according to claim 13, wherein each strain gauge (9.1A, 9.2A, 9.1B, 9.2B) has a cross-section that is rectangular with a long side of length less than 1 µm.

21. Sensor according to claim 20, wherein each strain gauge (9.1A, 9.2A, 9.1B, 9.2B) has a cross-section that is rectangular with a long side of length equal to about 250 nm.

22. Sensor according to claim 20, wherein each strain gauge (9.1A, 9.2A, 9.1B, 9.2B) has a length less than 10 µm.

23. Sensor according to claim 22, wherein each strain gauge (9.1A, 9.2A, 9.1B, 9.2B) has a length of about 3 µm.

24. Sensor according to claim 13, wherein the excitation means (7, 12) are arranged to move the resonator (3) to reciprocate between two positions.

25. Sensor according to claim 13, wherein the excitation means comprise at least one element (12) for moving the resonator from a first position to a second position, and an element (4) for resiliently returning the resonator towards its first position.
